**Europäisches Patentamt**

**European Patent Office**

**Office européen des brevets**

(19)

(11) Veröffentlichungsnummer : **0 090 071**
**B1**

(12) **EUROPÄISCHE PATENTSCHRIFT**

(45) Veröffentlichungstag der Patentschrift :
16.04.86

(21) Anmeldenummer : 82105251.1

(22) Anmeldetag : 15.06.82

(51) Int. Cl.⁴ : **B 62 J   7/08**

(54) **Halterungszunge.**

(30) Priorität : 26.03.82 DE 3211293

(43) Veröffentlichungstag der Anmeldung :
05.10.83 Patentblatt 83/40

(45) Bekanntmachung des Hinweises auf die Patenterteilung : 16.04.86 Patentblatt 86/16

(84) Benannte Vertragsstaaten :
AT BE CH DE FR GB IT LI LU NL SE

(56) Entgegenhaltungen :
GB-A- 2 119 012
US-A- 4 241 857

(73) Patentinhaber : KRAUSER Kraftfahrzeug-Zubehör
Vertriebs-GmbH
Hörmannsbergerstrasse 18
D-8905 Mering (DE)

(72) Erfinder : Krauser, Michael
Obere Bahnhofstrasse 56-60
D-8034 Germering (DE)

(74) Vertreter : von Kirschbaum, Albrecht, Dipl.-Ing.
Hermann-Ehlers-Strasse 21a
D-8034 Germering (DE)

## Beschreibung

Die Erfindung betrifft eine Halterungszunge zum Befestigen und Sichern eines Motorradkoffers an einem seitlich an einem Motorrad angebrachten Halterungsteil, mit einer Ausnehmung.

Bei der Befestigung eines Motorradkoffers an und in einem seitlich an einem Motorrad angebrachten Halterungsrahmen wird der Koffer zuerst beispielsweise mittels eines an einer Ausbuchtung an dessen Boden ausgebildeten und von diesem vorstehenden Rippenbund hinter dem in Fahrtrichtung gesehen vorderen, aufrechten Verbindungsteil des Halterungsrahmens eingebracht ; dann wird ein Schloß, das am anderen, dem Rippenverbund abgewandten Ende des Koffers befestigt ist, in eine Halterungszunge, die an dem in Fahrtrichtung gesehen hinteren, aufrechten Verbindungsteil des Halterungsrahmens angebracht ist, so weit eingeführt, daß eine federnde Sicherungsraste in dem Schloß in eine am freien, vom Halterungsrahmen vorstehenden Ende der Zunge ausgebildete Ausnehmung einrastet.

Wenn das Schloß gewissenhaft so weit in die Halterungszunge eingeführt wird, daß die Sicherungsraste hörbar in die Ausnehmung der Zunge einrastet, ist der Koffer, wie umfangreiche Versuche der Anmelderin gezeigt haben, einwandfrei und sicher an und in dem an einem Motorrad angebrachten Halterungsrahmen befestigt. Wenn jedoch in der Eile oder aus Gleichgültigkeit nicht darauf geachtet wird, ob die Sicherungsraste in die Ausnehmung der Zunge eingerastet ist, kann es vorkommen, daß die Sicherungsraste nur auf dem zum freien Ende der Zunge vor der Ausnehmung ausgebildeten Quersteg zu liegen kommt und nicht in die Ausnehmung einrastet. In einem solchen Fall ist es dann durchaus denkbar, daß sich während der Fahrt aufgrund von Erschütterungen u. ä. ein so oberflächlich eingeführter und nicht richtig eingerasteter Koffer aus dem Halterungsrahmen löst und auf die Fahrbahn geschleudert wird. Dadurch wird dann nicht nur eine kritische, sondern oft sogar gefährliche Situation für den Motorradfahrer, von dessen Motorrad sich der Koffer gelöst hat, heraufbeschworen, sondern durch den auf die Fahrbahn geschleuderten Koffer werden außerdem andere nachfolgende oder entgegenkommende Verkehrsteilnehmer stark gefährdet und unter Umständen ein Unfall ausgelöst.

Aufgabe der Erfindung ist es daher, eine Halterungszunge zum Befestigen und Sichern eines Motorradkoffers an einem seitlich an einem Motorrad angebrachten Halterungsrahmen zu schaffen, durch welche auch bei einer nachlässigen oder oberflächlichen Einführung der Zunge in ein an einem Motorradkoffer angebrachtes Schloß eine einwandfreie und absolut sichere Halterung eines Motorradkoffers an und in einem Halterungsrahmen gewährleistet ist. Gemäß der Erfindung ist dies bei einer Halterungszunge nach Anspruch 1 gelöst. Eine vorteilhafte Weiterbildung der Erfindung ist in dem Unteranspruch angeführt.

Die Halterungszunge gemäß der Erfindung ist länger als eine herkömmliche Halterungszunge ausgebildet, und an ihrem freien, im montierten Zustand von Halterungsrahmen vorstehenden Ende ist noch eine zweite Ausnehmung ausgebildet, die von der ersten üblichen Ausnehmung durch einen schmalen Steg getrennt ist. Hierbei ist durch die Verlängerung der erfindungsgemäßen Zunge sichergestellt, daß sie, wenn der Koffer überhaupt in dem Halterungsrahmen hält und nicht schon beim Loslassen des Koffers herunterfällt, zumindest soweit in das am Koffer befestigte Schloß eingeführt sein muß, daß dessen Sicherungsraste auf jeden Fall mindestens in die zweite Ausnehmung einrastet, so daß der Koffer sicher und zuverlässig am Motorrad gehaltert ist.

Bei einem korrekten Einführen der Zunge in das am Koffer befestigte Schloß muß jedoch die Sicherungsraste zweimal hörbar einrasten, so daß sie dann in die hintere, näher bei dem Halterungsrahmen liegende Ausnehmung eingerastet ist. Wenn jedoch nicht gewissenhaft darauf geachtet wird, ob die Sicherungsraste zweimal hörbar eingerastet hat, kann es vorkommen, daß die Sicherungsraste auf den Zwischensteg zwischen den beiden Ausnehmungen zu liegen kommt. Obwohl in einem solchen Fall der Koffer nicht ganz korrekt und der Bedienungsanleitung entsprechend an dem Halterungsrahmen des Motorrads befestigt ist, wird hierdurch im Unterschied zu dem entsprechenden Fall bei einer herkömmlichen Halterungszunge, bei welcher bei oberflächlichem Einführen der Zunge in das Schloß die Halterungslasche auf den Quersteg am freien Ende der Lasche zu liegen kommt, keine gefährliche Situation heraufbeschworen, da, wenn sich der Koffer während der Fahrt aufgrund der dabei auftretenden Erschütterung u. ä. von dem Halterungsrahmen lösen will, die Sicherungsraste des Schlosses nunmehr in die zweite Ausnehmung der erfindungsgemäßen Halterungszunge einrastet, und dadurch immer noch einwandfrei und sicher mit dem Halterungsrahmen des Motorrades verbunden ist. Bei Verwendung der erfindungsgemäßen Halterungszunge ist daher die eingangs geschilderte, gefährliche Situation ausgeschlossen, daß sich ein Koffer aufgrund einer oberflächlichen Einführung der Halterungszunge in das Kofferschloß von dem Motorrad lösen kann und auf die Fahrbahn geschleudert wird. Bei Verwendung der erfindungsgemäßen Halterungszunge ist somit jedwede Gefährdung der Verkehrsteilnehmer ausgeschlossen.

Nachfolgend wird die Erfindung anhand einer bevorzugten Ausführungsform unter Bezugnahme auf die anliegende Zeichnung im einzelnen beschrieben. Es zeigen :

Figur 1 eine Draufsicht auf eine herkömmliche Halterungszunge;

Figur 2 eine Draufsicht auf eine Halterungszunge gemäß der Erfindung, und

Figur 3 eine Schnittansicht durch die erfindungsgemäße Halterungszunge entlang der Linie III-III in Fig. 2.

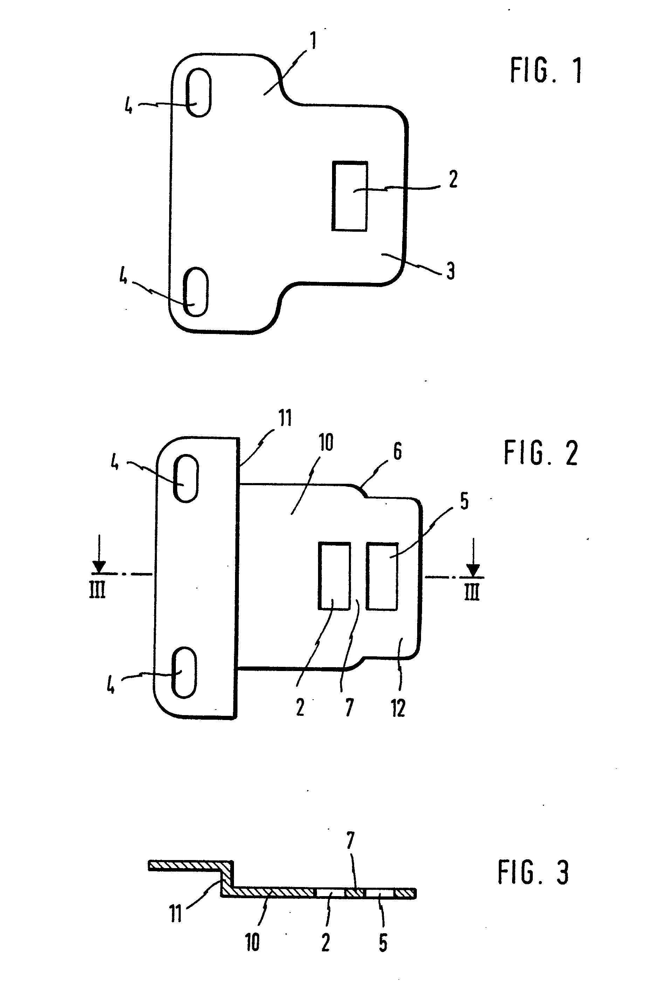

In Fig. 1 ist eine herkömmliche Halterungszunge 1 dargestellt, die auf einer Seite Befestigungs-Langlöcher 4 und am gegenüberliegenden Ende eine Ausnehmung 2 aufweist, vor welcher ein Quersteg 3 ausgebildet ist. Sobald eine Sicherungsraste eines an einem Motorradkoffer befestigten Schlosses nicht in die Ausnehmung 2 einrastet, sondern aufgrund einer oberflächlichen Einführung der Halterungszunge 1 in das Schloß auf den Quersteg 3 zu liegen kommt, kann es während der Fahrt aufgrund von Erschütterungen u. ä. ohne weiters vorkommen, daß sich der Koffer von dem Halterungsrahmen löst und auf die Fahrbahn geschleudert wird.

Dies ist mit der in Fig. 2 dargestellten Halterungszunge 10 gemäß der Erfindung verhindert. Die erfindungsgemäße Halterungszunge 10 weist im Unterschied zu der herkömmlichen Halterungszunge 1 an ihrem freien Ende 12 neben der üblichen Ausnehmung 2 noch eine zweite, gleichgroße Ausnehmung 5 auf; die beiden Ausnehmungen sind durch einen schmalen Zwischensteg 7 getrennt. Im Unterschied zu der flachen, herkömmlichen Halterungszunge 1 weist die Halterungszunge 10 eine Abkantung 11 auf, so daß der Teil mit den Befestigungs-Langlöchern 4 einer anderen, in der Darstellung der Fig. 3 höheren Ebene liegt als der Teil der Zunge 10 mit den beiden Ausnehmungen 2 und 5. Ferner ist am Außenumfang der Halterungszunge 10 auf beiden Seite eine Abstufung 6 ausgebildet, um das Einführen der Zunge in das an einem Motorradkoffer angebrachte Schloß zu erleichtern.

Aufgrund der Verlängerung der Halterungszunge 10 muß bei deren Einführen in ein an einem Motorradkoffer angebrachtes Schloß dessen Sicherungsraste auf jeden Fall zumindest in die vordere, zweite Ausnehmung 5 einrasten, da sonst der Koffer in dem Halterungsrahmen überhaupt nicht hält und beim Loslassen sofort aus dem Halterungsrahmen herausfällt. Obwohl bei einem gewissenhaften Einführen der Halterungszunge in das am Koffer angebrachte Schloß dessen Sicherungsraste in die hintere, erste Ausnehmung 2 hörbar eingerastet sein muß, kann es bei einem weniger gewissenhaften Einführen der Halterungszunge in das Schloß durch- aus vorkommen, daß dessen Sicherungsraste auf den Zwischensteg 7 zwischen den beiden Ausnehmungen 2 und 5 zu liegen kommt. Wenn sich in einem solchen Fall der Koffer während einer Fahrt aufgrund von Erschütterungen u. ä. von dem Halterungsrahmen lösen will, kann dies bei der erfindungsgemäßen Halterungszunge nicht vorkommen, da die Sicherungsraste des Schlosses dann in die vordere, zweite Ausnehmung 5 einrastet und in dieser Stellung den Koffer ebenfalls noch absolut sicher und zuverlässig an und in dem Halterungsrahmen hält. Bei Verwenden der erfindungsgemäßen Halterungszunge 10 ist es somit äußerst unwahrscheinlich und praktisch ausgeschlossen, daß sich ein in einem Halterungsrahmen befestigter Koffer aus diesem lösen kann.

## Patentansprüche

1. Halterungszunge zum Befestigen und Sichern eines Motorradkoffers an einem seitlich an einem Motorrad angebrachten Halterungsrahmen, mit einer Ausnehmung, dadurch gekennzeichnet, daß in der verlängerten Zunge (10) an ihrem von Halterungsrahmen vorstehenden, freien Ende (12) vor der Ausnehmung (2) noch eine zweite gleichgroße Ausnehmung (5) ausgebildet ist, wobei die beiden Ausnehmungen (2, 5) durch einen schmalen Steg (7) voneinander getrennt sind.

2. Halterungszunge nach Anspruch 1, dadurch gekennzeichnet, daß die Außenform der Zunge (10) etwa in Höhe des Steges (7) zwischen den beiden Ausnehmungen (2, 5) auf beiden Seiten eine kleine Abstufung (6) aufweist.

## Claims

1. Retaining tongue, for the fastening and securing of a motor cycle bag at a retaining frame attached laterally at a motor cycle, with a cut-out, characterised thereby, that in the prolonged tongue (10) at its free end (12) projecting from the retaining frame, a second equally large cut-out (5) is still formed in front of the cut-out (2), wherein both the cut-outs (2, 5) are each separated from the other by a narrow weg (7).

2. Retaining tongue according to claim 1, characterised thereby, that the outline shape of the tongue (10) at about the level of the web (7) displays a small step (6) on both sides between both the cut-outs (2, 5).

## Revendications

1. Languette de retenue pour fixer et bloquer un coffre de motocycliste sur un cadre de retenue installé sur le côté d'une motocyclette, cette languette présentant un évidement et étant caractérisée par le fait qu'un second évidement (5) de dimensions identiques est encore ménagé avant l'évidement (2) dans la languette (10) prolongée, à l'extrémité libre (12) de cette dernière saillant au-delà du cadre de retenue, les deux évidements (2, 5) étant séparés l'un de l'autre par une étroite membrure (7).

2. Languette de retenue selon la revendication 1, caractérisée par le fait que la configuration externe de cette languette (10) possède de part et d'autre un petit décrochement (6), sensiblement à la hauteur de la membrure (7) entre les deux évidements (2, 5).

FIG. 1

FIG. 2

FIG. 3

1